(19) **Europäisches Patentamt**
**European Patent Office**
**Office européen des brevets**

(11) Numéro de publication : **0 286 486 B1**

(12) **FASCICULE DE BREVET EUROPEEN**

(45) Date de publication du fascicule du brevet :
**02.01.92 Bulletin 92/01**

(51) Int. Cl.[5] : **B01D 1/08,** B01D 1/14, C13G 1/00, C13G 1/04

(21) Numéro de dépôt : **88400657.8**

(22) Date de dépôt : **18.03.88**

(54) **Perfectionnement apporté aux procédés d'évaporation mettant en oeuvre des évaporateurs du type tubulaire.**

(30) Priorité : **24.03.87 FR 8704061**

(43) Date de publication de la demande :
**12.10.88 Bulletin 88/41**

(45) Mention de la délivrance du brevet :
**02.01.92 Bulletin 92/01**

(84) Etats contractants désignés :
**BE DE ES FR GB IT NL SE**

(56) Documents cités :
**DE-C- 153 921**
**FR-A- 2 578 856**
**FR-E- 26 388**
**GB-A- 990 425**
**GB-A- 1 569 729**
**US-A- 4 124 438**

(73) Titulaire : **COMPAGNIE FRANCAISE DE SUCRERIE**
**336, rue Saint-Honoré**
**F-75001 Paris (FR)**

(72) Inventeur : **Leconte, Denis**
**15 route de Soissons**
**Bucy-Le-Long F-02200 Soissons (FR)**
Inventeur : **Smit, Roland**
**La Grevière**
**Bucy-Le-Long F-02200 Soissons (FR)**
Inventeur : **de Warren, Bertrand**
**11 rue des Minimes**
**F-02200 Soissons (FR)**

(74) Mandataire : **Rinuy, Santarelli**
**14, avenue de la Grande Armée**
**F-75017 Paris (FR)**

EP 0 286 486 B1

Jouve, 18, rue Saint-Denis, 75001 PARIS

## Description

La présente invention concerne un perfectionnement apporté aux procédés d'évaporation mettant en oeuvre des évaporateurs du type tubulaire présentant un faisceau de tubes verticaux.

Les procédés d'évaporation mettant en oeuvre des évaporateurs tubulaires se caractérisent essentiellement par le fait que l'on admet le liquide à évaporer dans un faisceau de tubes verticaux baignant dans un fluide chauffant, si bien que ce fluide chauffant cède sa chaleur au fluide à évaporer à travers les parois desdits tubes, de façon que le liquide à évaporer se réchauffe jusqu'à bouillir à l'intérieur de ces tubes.

L'ébullition du liquide au sein de chaque tube du faisceau de tubes conduit à la formation de bulles de vapeur dudit liquide qu s'échappent à la partie supérieure de chacun des tubes.

Ce type d'évaporateurs est généralement dénommé dans la technique d'évaporation : "évaporateurs à grimpage".

Au cours du fonctionnement, puisqu'il y a plus de vapeur à la partie supérieure du tube qu'à sa partie inférieure, on constate :

— que dans chaque tubes les bulles de vapeur du liquide à évaporer occupent une grande partie du volume de chaque tube, le fluide en ébullition étant au contact de la paroi chauffante. Ce fluide se présente en couches de plus en plus minces au fur et à mesure de la montée du liquide ;

— que, par ailleurs, la vitesse ascensionnelle des bulles est de plus en plus rapide au fur et à mesure de cette ascension.

Il s'ensuit que plus la couche de liquide est mince et plus la vitesse est rapide, meilleur est le coefficient d'échange thermique entre le fluide dans lequel est immergé le faisceau de tubes et chaque tube.

La présente invention se propose par conséquent de favoriser ces deux phénomènes et elle vise un procédé mettant en oeuvre un évaporateur à tubes verticaux, fondé sur le fonctionnement décrit ci-dessus, essentiellement caractérisé par le fait que l'on injecte un courant gazeux dans le liquide à évaporer, avant l'ascension de ce dernier dans chaque tube.

De façon avantageuse, le courant gazeux à injecter dans le liquide à évaporer est de l'air, ou un autre gaz, de l'air en mélange avec un autre gaz et/ou de la vapeur d'eau, ou bien encore un courant de vapeur d'eau.

En procédant de la sorte, on réalise une émulsion entre le liquide à évaporer et ledit courant gazeux permettant ainsi d'engendrer plus rapidement et pratiquement dès la base de chaque tube vertical, des bulles plus grosses (bulles de gaz, bulles de gaz et de vapeur ou bulles de vapeur).

En mettant en oeuvre le procédé tel qu'il vient d'être défini, on constate que l'on est à même d'améliorer le coefficient d'échange thermique. Dans les cas étudiés, le facteur de multiplication est généralement supérieure à 2 et peut même dépasser 4.

Il s'ensuit que l'on peut améliorer très fortement le rendement d'une station d'évaporation, ce qui amène des économies d'énergie importantes, tout en améliorant la qualité du produit issu de l'évaporation.

Une des applications fort intéressantes du procédé de l'invention concerne l'industrie du sucre, en particulier au stade de l'évaporation des sirops de sucre.

D'autres caractéristiques et les avantages de l'invention ressortiront plus clairement de l'exemple donné ci-après d'application du procédé de l'invention dans le domaine de la sucrerie, avec référence au schéma annexé illustrant un mode de mise en oeuvre du procédé perfectionné selon l'invention.

Exemple

En sucrerie, pour amener le jus sucré à une concentration convenable nécessitée par le procédé sucrier, on utilise un système appelé "multiple effet". Ce système est constitué de plusieurs évaporateurs en série dans lesquels le jus sucré de plus en plus concentré passe d'un évaporateur à l'autre en cédant dans chacun une partie de son eau sous forme de vapeur.

Le premier évaporateur étant alimenté par une source extérieure de vapeur, on se sert de la vapeur qu'il engendre pour chauffer le deuxième évaporateur. De même, la vapeur du deuxième évaporateur sert à chauffer le troisième et ainsi de suite.

Comme chaque évaporateur est alimenté par une vapeur de moins en moins chaude, on applique à chacun des pressions de plus en plus faibles pour atteindre les conditions d'ébullition du jus.

L'installation d'évaporation choisie pour illustrer l'invention est équipée d'un multiple effet de six évaporateurs. Les cinquième et sixième effets correspondent à des évaporateurs à double circulation, c'est-à-dire que ces évaporateurs ont une cloison interne qui les sépare en deux compartiments que le jus parcourt successivement.

Ce deux évaporateurs de cinquième et sixième effets ont été équipés d'un système permettant l'introduction d'un mélange d'air comprimé ou de vapeur ou d'un mélange des deux (voir figure annexée).

L'introduction peut être faite dans le premier ou le deuxième compartiment, ou dans les deux.

Sur cette figure :

— V désigne l'entrée de la vapeur chauffant les tuyaux de l'échangeur ;

— E désigne cet échangeur ;

— $C_1$ et $C_2$ désignent respectivement les premier et second compartiments ;

— P désigne la cloison de séparation entre ces deux compartiments ;

— $A_1$ et $A_2$ désignent respectivement les entrées du jus dans le compartiments $C_1$-$C_2$ ;

— $S_1$ et $S_2$ désignent respectivement les trop-plein de sortie du jus concentré de $C_1$-$C_2$ ;

— U désigne la sortie de la vapeur produite dans $C_1$-$C_2$ ; et

— D désigne l'introduction de l'air et/ou de la vapeur.

Dans le cas particulier où l'introduction a été faite dans les seconds compartiments de chacun des évaporateurs considérés, les résultats qui ont été obtenus sont résumés dans le tableau suivant, en comparaison avec ceux que l'on avait avant modification :

| Pression de vapeur | Entrée du 1er effet (Pa) | 5ème effet (Pa) | 6ème effet (Pa) |
|---|---|---|---|
| Avant modification | 333 426,1 | 103 950,49 | 73 549,87 |
| Après modification | 284 392,85 | 103 950,49 | 83 356,52 |

On constate pour une même pression obtenue au 5ème effet :

1) une diminution importante de la pression de vapeur en tête du 1er effet de 49 033,25 Pa

2) une augmentation de la pression dans la calandre du 6ème effet de 9 806,65 Pa.

Ceci se traduit par une amélioration des performances de l'installation :

— en amenant des économies d'énergie importantes ;

— en permettant une amélioration du produit sortant de l'atelier. On sait que le sirop de betterave est un produit thermosensible et que le produit obtenu sera d'autant meilleur qu'il aura été chauffé à moins haute température.

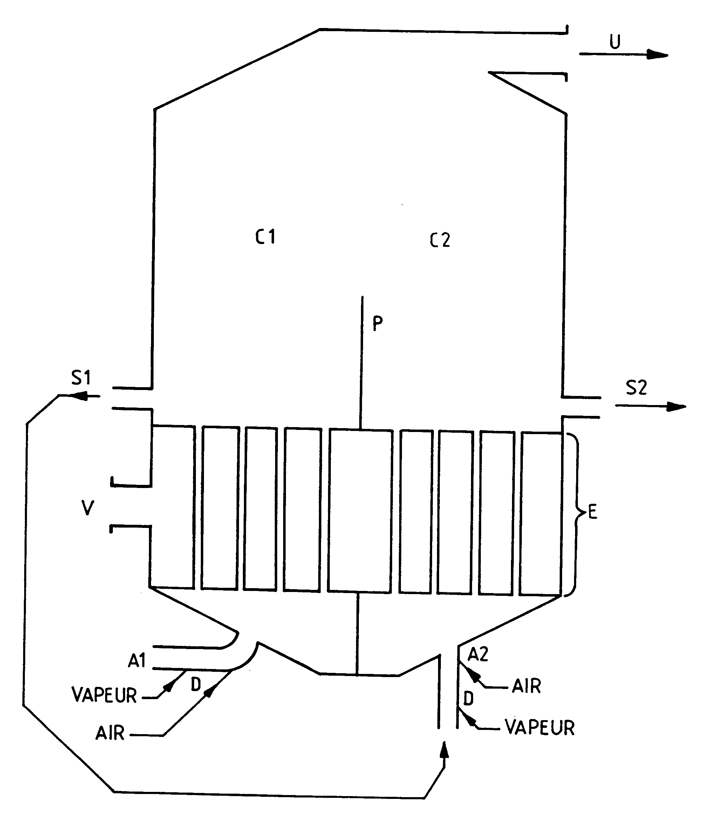

## Revendications

1. Procédé d'évaporation mettant en oeuvre des évaporateurs du type tubulaire présentant un faisceau de tubes verticaux baignant dans un fluide chauffant et dans lesquels on fait circuler le liquide à évaporer qui y est chauffé jusqu'à bouillir, caractérisé en ce que l'on injecte un courant gazeux dans ledit liquide à évaporer, avant l'ascension de ce dernier dans chaque tube.

2. Procédé selon la revendication 1 caractérisé en ce que le courant gazeux à injecter dans le liquide à évaporer est de l'air, ou un autre gaz, de l'air en mélange avec un autre gaz et/ou de la vapeur d'eau.

3. Application du procédé selon la revendication 1 ou 2 à l'industrie du sucre, en particulier au stade de l'évaporation du sirop de sucre.

4. Application d'un procédé d'évaporation mettant en oeuvre des évaporateurs du type tubulaire présentant un faisceau de tubes verticaux baignant dans un fluide chauffant et dans lesquels on fait circuler le liquide à évaporer qui y est chauffé jusqu'à bouillir, procédé dans lequel on injecte un courant gazeux dans ledit liquide à évaporer, avant l'ascension de ce dernier dans chaque tube, à l'amélioration du coefficient d'échange thermique entre le liquide à évaporer et les évaporateurs.

## Claims

1. An evaporation process using tube-type evaporators comprising a cluster of vertical tubes which are immersed in a heating fluid and in which the liquid to be evaporated is circulated and heated therein until it boils, characterized in that a gas flow is injected into said liquid to be evaporated before it rises in each tube.

3

2. A process according to claim 1, characterized in that the gas flow to be injected into the liquid to be evaporated is air, or another gas, air mixed with another gas and/or steam.

3. Application of the process according to claims 1 or 2 to the sugar making industry, more particularly at the stage of evaporation of the sugar syrup.

4. Application of an evaporation process using tube-type evaporators comprising a cluster of vertical tubes which are immersed in a heating fluid and in which the liquid to be evaporated is circulated and heated therein until it boils, wherein a gas flow is injected into said liquid to be evaporated before it rises in each tube, to the improvement of the heat exchange coefficient between the liquid to be evaporated and the evaporators.

**Patentansprüche**

1. Verdampfungsverfahren durch Inbetriebnahme von Rohrverdampfern in Form eines Bündels vertikaler Rohre, die in eine sich erhitzende Flüssigkeit eingetaucht werden und in welchen man die zu verdampfende Flüssigkeit, die dort bis zum Sieden erhitzt wird, zirkuliert, dadurch gekennzeichnet, daß man in die zu verdampfende Flüssigkeit vor deren Aufsteigen in jedem Rohr einen Gasstrom einbläßt.

2. Verfahren gemäß Anspruch 1, dadurch gekennzeichnet, daß der in die zu verdampfende Flüssigkeit einzublasende Gasstrom Luft oder ein anderes Gas, Luft in Mischung mit einem anderen Gas und/oder Wasserdampf ist.

3. Anwendung des Verfahrens gemäß Anspruch 1 oder 2 in der Zuckerindustrie, insbesondere im Stadium der Zuckersirupverdampfung.

4. Anwendung eines Verdampfungsverfahrens durch Inbetriebnahme von Rohrverdampfern in Form eines Bündels vertikaler Rohre, die in eine sich erhitzende Flüssigkeit eingetaucht sind und in welchen man die zu verdampfende Flüssigkeit, die dort bis zum Sieden erhitzt wird, zirkuliert, wobei man bei dem Verfahren in die zu verdampfende Flüssigkeit vor deren Aufsteigen in jedem Rohr einen Gasstrom einbläßt, um den Wärmeaustauschkoeffizienten zwischen der zu verdampfenden Flüssigkeit und den Verdampfern zu verbessern.